(19) **Europäisches Patentamt**
**European Patent Office**
**Office européen des brevets**

(11) **EP 3 215 394 B1**

(12) **FASCICULE DE BREVET EUROPEEN**

(45) Date de publication et mention
de la délivrance du brevet:
**03.07.2019 Bulletin 2019/27**

(21) Numéro de dépôt: **15804874.4**

(22) Date de dépôt: **02.11.2015**

(51) Int Cl.:
*B60W 50/00* (2006.01)  *B60L 11/08* (2006.01)
*B60W 10/06* (2006.01)  *B60W 10/08* (2006.01)
*B60W 20/00* (2016.01)  *B60W 20/13* (2016.01)
*B60L 11/18* (2006.01)

(86) Numéro de dépôt international:
**PCT/FR2015/052946**

(87) Numéro de publication internationale:
**WO 2016/071615 (12.05.2016 Gazette 2016/19)**

(54) **PROCÉDÉ DE GESTION DE L'ÉTAT DE CHARGE D'UNE BATTERIE DE TRACTION D'UN VÉHICULE HYBRIDE**

VERFAHREN ZUR VERWALTUNG DES LADEZUSTANDES EINER TRAKTIONSBATTERIE EINES HYBRIDFAHRZEUGS

METHOD FOR MANAGING THE CHARGE STATE OF A TRACTION BATTERY OF A HYBRID VEHICLE

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **03.11.2014 FR 1460586**

(43) Date de publication de la demande:
**13.09.2017 Bulletin 2017/37**

(73) Titulaire: **Renault S.A.S.**
**92100 Boulogne-Billancourt (FR)**

(72) Inventeurs:
• **MIRO-PADOVANI, Thomas**
**78310 Maurepas (FR)**
• **OURABAH, Abdel-Djalil**
**75013 Paris (FR)**

(56) Documents cités:
**EP-A1- 2 177 389    EP-A2- 0 829 389
US-A1- 2004 084 232    US-A1- 2012 176 231**

**Description**

La présente invention concerne un procédé de gestion de l'état de charge d'une batterie comprenant une étape d'activation d'une phase de maintien de charge de la batterie dans laquelle la batterie est rechargée de façon intermittente de façon à maintenir l'état de charge de la batterie au-dessus d'une valeur cible prédéterminée.

L'invention s'applique préférentiellement à une batterie de traction d'un véhicule hybride équipé d'un groupe motopropulseur hybride, comprenant un moteur thermique et au moins une machine électrique destinés à assurer simultanément, ou indépendamment, la transmission d'un couple aux roues motrices du véhicule. L'invention s'applique de manière non limitative à une batterie de traction mise en oeuvre dans une architecture de groupe motopropulseur hybride nécessitant, lors d'une phase de mise en mouvement ou « décollage » à partir de l'arrêt et aux faibles vitesses de déplacement du véhicule, que la puissance fournie aux roues provienne exclusivement de la batterie de traction du véhicule. C'est le cas dans certaines architectures où, par construction, le moteur thermique ne peut intervenir dans la propulsion du véhicule qu'à partir d'une vitesse véhicule seuil prédéterminée, de sorte que le groupe motopropulseur ne dispose que de l'énergie électrique stockée dans la batterie de traction du véhicule pour assurer la mise en mouvement et le déplacement du véhicule jusqu'à l'atteinte de ladite vitesse véhicule seuil prédéterminée à laquelle le moteur thermique peut intervenir.

Dans cette phase de « décollage », le moteur thermique ne peut ni participer à la traction, ni recharger la batterie. De ce fait, si le niveau de charge de la batterie de traction descend trop bas, en dessous d'un seuil prédéfini, une immobilisation (temporaire) du véhicule sera nécessaire pour activer un mode de recharge de la batterie de traction à l'arrêt du véhicule. Or, dans des conditions de roulage de type embouteillage ou montée de col à faible vitesse (sous la neige), il peut devenir difficile de maintenir l'état de charge de la batterie au-dessus du seuil lui permettant d'assurer le niveau de puissance minimal requis. La contribution des accessoires électriques sera en outre un facteur aggravant de nature à accélérer la décharge de la batterie de traction. Enfin, la température est également un facteur à considérer, dans la mesure où elle influe sur l'énergie électrique effectivement disponible pour la traction.

Dans certains cas d'usage, la loi de gestion de l'énergie appliquée par le calculateur dédié à la gestion de la batterie ne permet donc pas de maintenir la batterie dans des conditions qui lui permettront d'assurer le niveau de puissance minimal requis. Le véhicule se trouve alors potentiellement en situation d'immobilisation temporaire, dans laquelle la batterie de traction est incapable de fournir la puissance de traction requise pour assurer le décollage du véhicule à partir de l'arrêt et aux basses vitesses de déplacement du véhicule.

Le document de brevet FR2992274, au nom de la demanderesse, fait connaître un procédé de commande de la recharge d'une batterie de traction de véhicule hybride équipé d'un groupe motopropulseur hybride présentant les limitations telles qu'exposées ci-dessus, ce procédé prévoyant que, à l'arrêt forcé du véhicule, le moteur thermique entraîne la machine électrique fonctionnant en mode générateur pour recharger la batterie, tandis que le démarrage du véhicule est purement et simplement refusé tant que l'état de charge de la batterie n'est pas repassé au dessus d'un seuil lui permettant de fournir le niveau de puissance minimal requis.

Un inconvénient de ce système est que le véhicule est immobilisé jusqu'à la réhabilitation des performances de la batterie de traction, autrement dit jusqu'à ce que cette dernière revienne à des conditions d'état de charge et de température lui permettant de fournir le niveau de puissance minimal requis.

Aussi, il existe un besoin pour pouvoir limiter au maximum l'occurrence des cas d'immobilisation pour recharge de la batterie de traction à l'arrêt.

Le document EP 0 829 389 divulgue un procédé de gestion de l'état de charge d'une batterie selon le préambule de la revendication 1.

Ce but est atteint grâce à un procédé de gestion de l'état de charge d'une batterie comprenant une étape d'activation d'une phase de maintien de charge de la batterie dans laquelle la batterie est rechargée d'une manière intermittente en vue de maintenir l'état de charge de la batterie au-dessus d'une valeur d'état de charge cible prédéterminée, le procédé étant caractérisé en ce qu'il comprend des étapes de :

- détection de conditions critiques d'utilisation de la batterie propres à empêcher le maintien de l'état de charge de la batterie au-dessus de la valeur d'état de charge cible prédéterminée ; et
- majoration de la valeur d'état de charge cible prédéterminée lorsque les conditions critiques d'utilisation de la batterie sont détectées, de manière à anticiper l'étape d'activation de la phase de maintien de charge de la batterie.

La batterie étant une batterie de traction d'un véhicule hybride comprenant un moteur thermique et une machine électrique, l'étape de détection des conditions critiques d'utilisation de la batterie comprend avantageusement :

- une étape d'estimation de la puissance maximale de recharge qu'il serait possible de fournir à la batterie en tenant compte d'une part, des conditions de roulage courantes du véhicule et, d'autre part, de l'énergie électrique fournie par la batterie de traction pour l'alimentation du réseau de bord basse tension du véhicule, et

- la comparaison de la puissance maximale de recharge ainsi estimée avec un seuil prédéfini de détection en puissance des conditions critiques d'utilisation de la batterie.

Avantageusement, l'estimation de la puissance maximale de recharge qu'il serait possible de fournir à la batterie comprend le calcul suivant :

$$P_{\text{rechargema x}}(t) = \min\left(\left(\overline{P_{eng}}(t) - P_{GMT}(t)\right) \times \eta_{ME} + P_{dcdc}(t), Pbat_{\max}\right)$$

où $P_{\text{rechargema x}}(t)$ est l'estimation de la puissance maximale de recharge qu'il serait possible de fournir à la batterie, $\overline{P_{eng}}(t)$ est la puissance mécanique maximale que peut fournir le moteur thermique ;

$Pbat_{\max}$ est la puissance de recharge maximale autorisée pour la batterie ;

$P_{dcdc}(t)$ est la puissance consommée par un convertisseur DC/DC utilisé pour permettre d'alimenter, à partir de l'énergie prise sur la batterie de traction, le réseau de bord basse tension du véhicule ;

$P_{GMT}(t)$ est la puissance mécanique nécessaire à la traction ; et

$\eta_{ME}$ est le rendement de la machine électrique.

De préférence, l'estimation de la puissance maximale de recharge est une valeur moyennée déduite à partir des valeurs moyennes d'un ensemble de valeurs instantanées respectivement de $P_{dcdc}(t)$ et $P_{GMT}(t)$ acquises sur une fenêtre temporelle glissante.

Avantageusement, la fenêtre temporelle glissante peut avoir une durée de l'ordre de 300s.

De préférence, l'étape de majoration de la valeur d'état de charge cible prédéterminée peut inclure la détermination d'une valeur d'autonomie cible du véhicule en mode tout électrique, l'estimation d'une valeur d'énergie électrique nécessaire pour assurer l'autonomie cible dans les conditions courantes d'utilisation du véhicule et la conversion de la valeur d'énergie électrique nécessaire en une valeur d'état de charge en utilisant un facteur de conversion tenant compte de la température et du vieillissement de la batterie.

Il est en outre proposé un produit programme d'ordinateur comprenant des instructions pour effectuer les étapes du procédé décrit ci-dessus lorsque ce programme est exécuté par un processeur.

Le procédé décrit ci-dessus peut ainsi être mis en oeuvre par des moyens numériques de traitement, par exemple un microprocesseur, un microcontrôleur ou autre.

Il est en outre proposé un dispositif de gestion de l'état de charge d'une batterie comprenant des moyens de contrôle de la batterie pour activer des moyens de recharge de la batterie destinés à recharger la batterie d'une manière intermittente en vue de maintenir l'état de charge de la batterie au-dessus d'une valeur d'état de charge cible prédéterminée, ledit dispositif étant caractérisé en ce que lesdits moyens de contrôles sont aptes à détecter des conditions critiques d'utilisation de la batterie propres à empêcher le maintien de l'état de charge de la batterie au-dessus de la valeur d'état de charge cible prédéterminée et commander une une majoration de la valeur d'état de charge cible prédéterminée lorsque les conditions critiques d'utilisation sont détectées, de manière à anticiper l'activation des moyens de recharges de la batterie.

Il est en outre proposé un véhicule automobile hybride comprenant une batterie de traction et un dispositif de gestion tel que décrit ci-dessus.

D'autres particularités et avantages de l'invention ressortiront à la lecture de la description faite ci-après d'un mode de réalisation particulier de l'invention, donné à titre indicatif mais non limitatif, en référence à la figure unique annexée illustrant, en regard de l'évolution de la vitesse du véhicule en fonction du temps, l'évolution de la valeur moyenne de l'estimation de la puissance maximale de recharge théorique disponible pour la batterie utilisée pour déterminer les conditions critiques d'utilisation et celle de l'état de charge de la batterie (SOC).

La description ci-après est faite en référence à un véhicule hybride équipé d'un groupe motopropulseur hybride comprenant un moteur thermique et au moins un moteur électrique, où la phase de « décollage » du véhicule à l'arrêt du véhicule et aux basses vitesses (0 à 15 km/h environ) est assurée par le moteur électrique et via l'énergie électrique de la batterie de traction. Afin de pouvoir assurer la capacité de la batterie à fournir l'énergie requise pour la traction, en particulier celle nécessaire au décollage du véhicule sans immobilisation préalable pour recharge à l'arrêt, le procédé de l'invention prévoit de détecter des conditions critiques d'utilisation préjudiciable au maintien de l'état de charge de la batterie, afin de pouvoir activer, le cas échéant, un mode dédié de préservation de l'énergie électrique de la batterie.

Pour ce faire, un certain nombre de variables déjà à disposition dans le véhicule sont nécessaires, parmi lesquelles :

- la vitesse du véhicule : $v_{veh}(t)$ ;

- la puissance consommée par le convertisseur DC/DC :$P_{dcdc}(t)$ (le convertisseur DC/DC est classiquement utilisé pour permettre d'alimenter, à partir de l'énergie prise sur la batterie de traction, le réseau de bord basse tension du véhicule (tension continue 14V), sur lequel une puissance électrique est disponible et consommée par les différentes charges électriques installées à bord du véhicule et connectées électriquement au réseau de bord embarqué) ;

- la puissance fournie par le groupe motopropulseur (GMP) à la roue, correspondant au produit de la demande de couple à la roue exprimée par le conducteur (via l'accélérateur) et du régime de rotation de la roue : $P_{GMT}(t) = T_{GMT}(t) \times \omega_{roue}(t)$

- Une estimation de la puissance maximale de recharge qu'il serait possible de fournir à la batterie. Le calcul de cette grandeur est le suivant :

$$P_{\text{rechargema x}}(t) = \min\left(\left(\overline{P_{eng}}(t) - P_{GMT}(t)\right) \times \eta_{ME} + P_{dcdc}(t), Pbat_{\max}\right) \qquad (1)$$

Avec la convention suivante : une puissance électrique positive est une puissance de charge de la batterie.

$\overline{P_{eng}}(t)$ est la puissance mécanique maximale que peut fournir le moteur thermique, sur le rapport de transmission le plus favorable. En calculant le régime du moteur sur tous les rapports existants, on peut estimer son couple maximal sur chaque rapport, le produit du couple maximal et du régime donnant la puissance maximale du moteur sur chaque rapport, $\overline{P_{eng}}(t)$ étant donnée par la puissance la plus élevée obtenue sur tous les rapports.

$Pbat_{\max}$ est la puissance de recharge maximale autorisée pour la batterie et la machine électrique, cette grandeur est donc une consolidation entre les performances atteignables de la machine et les limitations de la batterie calculées par le BMS (Battery Management System).

Dans l'expression (1) ci-dessus, on part de la puissance mécanique maximale que peut fournir le moteur $\overline{P_{eng}}(t)$ et on retranche $P_{GMT}(t)$, à savoir la puissance mécanique nécessaire à la traction. La puissance mécanique (éventuellement) restante est convertie en puissance électrique via un rendement machine estimé et donné par $\eta_{ME}$. A la puissance électrique obtenue, on retranche $P_{dcdc}(t)$, la puissance électrique qui est prélevée par le convertisseur DC/DC. La puissance électrique résultante est minorée par $Pbat_{\max}$, la puissance maximale qu'il est possible d'envoyer à la batterie.

Deux cas d'utilisation distincts du véhicules vont être décrits ci-après pour illustrer l'intérêt du calcul précédent de l'estimation de la puissance maximale de recharge qu'il serait possible de fournir à la batterie.

Un premier cas d'utilisation concerne une phase de roulage du véhicule à une vitesse constante de 50 km/h. Dans ce cas, on peut estimer $P_{GMT}(t)$ à une valeur faible, par exemple 10kW. On peut estimer $\overline{P_{eng}}(t)$ à une valeur élevée. La puissance maximale du moteur considéré étant par exemple égale à 80kW, nous pouvons alors estimer $\overline{P_{eng}}(t)$ à 60kW. On fixe $P_{dcdc}(t)$ à une valeur moyenne, par exemple égale à -500W et on fixe $\eta_{ME}$ à 80%.

Dans ces conditions, la puissance de recharge maximale théorique peut être estimée à (60-10)*0,8 - 0,5 = 39,5kW.

Néanmoins, en pratique, la puissance de recharge maximale autorisée pour la batterie est plus faible, par exemple égale à 20kW. Aussi, la puissance maximale de recharge qu'il serait possible de fournir à la batterie $P_{\text{rechargema x}}(t)$ est, au final, estimée à 20kW dans ce cas d'utilisation. Ce résultat traduit le fait que, si on le souhaitait, on pourrait transférer 20kW à la batterie. Cela ne signifie pas que c'est la commande qui sera appliquée au véhicule. En revanche, compte tenu du niveau de puissance qu'il serait possible de transférer à la batterie, on peut considérer que si tout le parcours du véhicule se déroule dans ces conditions d'utilisation, la probabilité de ne pas réussir à maintenir l'état de charge de la batterie est nulle.

On se place maintenant dans un deuxième cas d'utilisation concernant une phase de décollage du véhicule, par exemple à 5km/h. Dans ce cas, $P_{GMT}(t)$ va dépendre de l'accélération demandée par le conducteur mais elle peut atteindre par exemple 15kW sur un décollage franc. Par contre, dans ce cas d'utilisation, $\overline{P_{eng}}(t)$ est nulle, car, comme expliqué plus haut, le moteur thermique ne peut pas participer à la traction à cette vitesse. On conserve les mêmes valeurs pour $P_{dcdc}(t)$ et $\eta_{ME}$ que celles fixées pour le premier cas d'utilisation, à savoir $P_{dcdc}(t)$ = -500W et $\eta_{ME}$ = 80%. Cependant, dans ce cas d'utilisation, la machine électrique va fonctionner en traction et va donc consommer de l'énergie électrique et non plus la produire, de sorte que son rendement effectif s'inverse à 1/80%.

Dans ces conditions, la puissance de recharge maximale théorique peut être estimée à (0 - 15)*(1/0,8) - 0,5 = -19,25kW. Ici, la puissance maximale de recharge est négative correspondant en fait à une puissance de décharge. Ceci illustre le fait que dans ces conditions d'utilisation et malgré une éventuelle volonté de recharger la batterie, une décharge de la batterie à - 19,25kW est inévitable. On peut donc se douter que sur un trajet comportant beaucoup de décollages, et dont la vitesse dépasse rarement les 15 km/h, vitesse permettant d'utiliser le moteur thermique, la probabilité de ne pas pouvoir maintenir l'état de charge de la batterie est réelle.

Selon un mode de réalisation, afin « d'extrapoler » des valeurs instantanées des variables décrites ci-dessus pour caractériser des conditions critiques au maintien de l'état de charge de la batterie, on utilise la méthode de la moyenne glissante sur une fenêtre temporelle passée. Nous moyennons donc les valeurs instantanées des variables acquises dans une fenêtre temporelle glissante, pour en déduire un signal filtré. La longueur de la fenêtre temporelle glissante est un paramètre de calibration de la stratégie de préservation de l'état de charge de la batterie, dont l'ordre de grandeur est, par exemple, de 300s. L'inconvénient de l'utilisation de la moyenne glissante est qu'elle nécessite de conserver en mémoire tous les éléments composant l'échantillon moyenné. Les variables utilisées sont par exemple acquises à une fréquence d'échantillonnage de 1 Hz, de sorte que pour une fenêtre temporelle de largeur 300s, chaque variable nécessite de mémoriser 300 valeurs. On adaptera en conséquence le besoin en mémoire RAM au niveau du calculateur implémentant la stratégie de préservation de l'état de charge de la batterie.

Ainsi, selon ce mode de réalisation, à partir des valeurs instantanées des quatre variables acquises telles que décrites ci-dessus, on en déduit leur valeur moyennée :

- la vitesse moyenne du véhicule : $v_{veh}^{moy}(t)$ ;

- la puissance moyenne consommée par le convertisseur DC/DC : $P_{dcdc}^{moy}(t)$ ;

- la puissance moyenne fournie par le GMP à la roue $P_{GMP}^{moy}(t)$ ;

- la puissance maximale de recharge moyenne : $P_{rechargema\,x}^{moy}(t)$.

La puissance maximale de recharge moyenne est la variable qui va être utilisée pour déterminer si les conditions d'utilisation sont critiques ou non pour le maintien de l'état de charge de la batterie. Par exemple, si, en moyenne, sur la durée de la fenêtre temporelle glissante, soit sur les 300 dernières secondes de roulage selon l'exemple donné plus haut, la puissance maximale de recharge moyenne estimée est :

- >>0, alors, dans ces conditions, il n'y a pas de raison de considérer le risque de ne pas pouvoir maintenir l'état de charge de la batterie.
- proche de 0, le risque de ne pas pouvoir réussir à maintenir l'état de charge de la batterie est à considérer.
- <0, le risque de ne pas pouvoir maintenir l'état de charge est avéré.

Les seuils de détection en puissance de conditions critiques d'utilisation pour la valeur de $P_{rechargema\,x}^{moy}(t)$, ainsi que les hystérésis pour en sortir, sont avantageusement des paramètres de calibration de la stratégie de préservation de l'état de charge de la batterie.

Si les conditions d'utilisation ne sont pas considérées critiques, la valeur d'état de charge cible de la batterie considérée par la loi de gestion de l'énergie reste constante (de l'ordre de 20% par exemple), afin de favoriser la répétabilité. En cas de détection de conditions critiques d'utilisation, la stratégie de préservation de l'état de charge est alors activée, et une étape de majoration de la valeur d'état de charge cible est mise en oeuvre. Plus précisément, la valeur d'état de charge cible majorée est calculée de la façon suivante :

Tout d'abord, on détermine une autonomie cible, notée *Autonomie$_{cible}$*, que l'on veut garantir pour le véhicule en mode tout électrique (autonomie en mode ZEV, pour « Zéro Emission Vehicle »), par exemple de l'ordre de 5km.

On estime alors l'énergie nécessaire pour assurer cette autonomie cible, dans les conditions courantes d'utilisation du véhicule :

$$Energie_{cible}(t) = \left[\frac{1}{\eta_{ME}}.P_{GMP}^{moy}(t) + P_{dcdc}^{moy}(t)\right] \times \frac{Autonomie_{cible}}{v_{veh}^{moy}(t)}$$

où: $\frac{1}{\eta_{ME}}.P_{GMP}^{moy}(t)$ est la puissance électrique moyenne nécessaire à la traction, $P_{dcdc}^{moy}(t)$ est la puissance électrique moyenne consommée par le convertisseur DC/DC, et le quotient $\frac{Autonomie_{cible}}{v_{veh}^{moy}(t)}$ exprime la durée nécessaire pour parcourir l'autonomie cible.

Puis, on traduit l'énergie cible ainsi estimée, exprimée en W.h, en pourcentage d'état de charge cible SOC_cible, en s'appuyant sur le facteur de conversion fourni par le BMS et qui tient compte de la température et du vieillissement de la batterie. Enfin, la valeur d'état de charge cible ainsi déterminée est limitée entre une valeur minimale et maximale fixées.

A noter que lorsque les conditions d'utilisation ne sont plus considérées comme critiques, on va constater une remontée de la puissance maximale de recharge moyenne $P_{\text{rechargema x}}^{moy}(t)$, conduisant à une désactivation de la stratégie de préservation de l'état de charge de la batterie, et la valeur d'état de charge cible reviendra alors à sa valeur initiale constante.

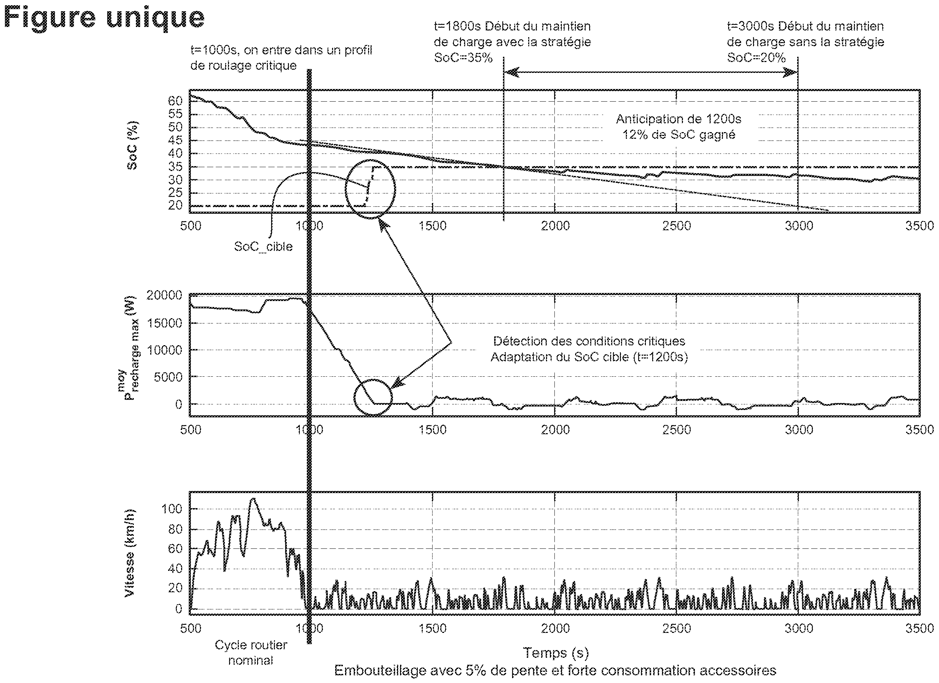

La figure unique annexée illustre les avantages de la mise en oeuvre de la stratégie de préservation de l'état de charge de la batterie telle qu'elle vient d'être décrite ci-dessus. La figure 1 montre la courbe de la vitesse du véhicule en fonction du temps suivant un scénario comprenant une première phase de roulage normal suivie d'une seconde phase d'embouteillage avec une pente de 5% et une forte consommation des accessoires électriques du véhicule et, en parallèle, la courbe de la puissance maximale de recharge moyenne telle qu'estimée selon les principes exposés plus haut et celle de l'état de charge de la batterie (SOC).

Le scénario illustré à titre d'exemple sur la figure débute par une phase de roulage classique en condition extra-urbaine, l'état de charge de départ est de 65%, le véhicule est donc en roulage en mode ZEV, et n'utilise pas le moteur thermique. Comme illustré, à t=1000s, le véhicule entre dans une phase d'embouteillage en pente. L'estimation du potentiel de recharge de la batterie, calculé par la stratégie de préservation de l'état de charge sur la base de la puissance maximale de recharge qu'il serait possible de fournir à la batterie dans ces conditions d'utilisation, commence alors à chuter et elle s'approche fortement de 0 aux alentours de t=1200s. Par conséquent, la détection de ces conditions critiques entraîne l'activation de la stratégie de préservation de l'état de charge. Conformément aux principes exposés plus haut, la valeur d'état de charge cible de la batterie SOC_cible, initialement fixée à 20% selon l'exemple de la figure, est majorée de 20 à 35%. A t=1800s, l'état de charge de la batterie passe en dessous de la valeur d'état de charge cible SOC_cible, le véhicule quitte le roulage en mode ZEV et la stratégie commande le début du maintien de l'état de charge de la batterie. Le moteur thermique démarre donc et lorsqu'il le peut (Vitesse véhicule >15km/h) entraîne la machine électrique fonctionnant en mode récupératif pour recharger la batterie. Comme illustré sur la figure, la recharge de la batterie n'est cependant pas suffisante pour assurer un maintien parfait de l'état de charge de la batterie par rapport à la valeur d'état de charge cible majorée, et l'état de charge de la batterie décroit lentement. Toutefois, en considérant la ligne en pointillés, qui représente une extrapolation de l'évolution de l'état de charge de la batterie sans mise en oeuvre de la stratégie, c'est-à-dire si la valeur d'état de charge cible était restée à sa valeur initiale de 20% et que le véhicule n'était pas passé en maintien de charge, on peut estimer que l'état de charge de la batterie aurait atteint la valeur de 20% à t=3000s environ et c'est à cet instant seulement que le maintien de charge de la batterie aurait été activé. Aussi, cet exemple montre que la stratégie selon l'invention, grâce à la majoration de la valeur d'état de charge cible lors de la détection de conditions critiques au maintien de l'état de charge de la batterie, permet d'anticiper l'activation du maintien de l'état de charge de la batterie d'environ 1200s et ainsi, de préserver l'état de charge de la batterie. En effet, selon cet exemple, à t=3000s, l'état de charge de la batterie lorsque la stratégie de l'invention est mise en oeuvre, est supérieur d'environ 12% à celui qu'aurait la batterie sans l'utilisation de ladite stratégie. Cette marge permettra avantageusement de reculer l'échéance de la mise en oeuvre de la phase de recharge de la batterie, véhicule arrêté, comme enseigné par le document de brevet FR2992274 cité plus haut.

En outre, lorsque la phase d'embouteillage est terminée, la puissance maximale de recharge $P_{\text{rechargema x}}^{moy}(t)$ remontera jusqu'à dépasser le seuil prédéfini de détection en puissance des conditions critiques d'utilisation, où la valeur d'état de charge cible reviendra à sa valeur nominale de 20% selon l'exemple et où l'énergie électrique sera consommée à nouveau.

Les moyens de calculs mis en oeuvre pour l'estimation de la puissance maximale de recharge $P_{\text{rechargema x}}^{moy}(t)$ à comparer avec un seuil prédéfini de détection en puissance de conditions critiques d'utilisation pour l'activation de la stratégie de préservation de l'état de charge de la batterie, sont implémentés par un calculateur embarqué dans le véhicule, par exemple un calculateur adapté pour contrôler le groupe motopropulseur du véhicule dans son ensemble.

## Revendications

**1.** Procédé de gestion de l'état de charge (SOC) d'une batterie comprenant une étape d'activation d'une phase de maintien de charge de la batterie dans laquelle la batterie est rechargée d'une manière intermittente en vue de maintenir l'état de charge de la batterie au-dessus d'une valeur d'état de charge cible prédéterminée (SOC_cible), le procédé étant **caractérisé en ce qu'**il comprend des étapes de :

- détection de conditions critiques d'utilisation de la batterie propres à empêcher le maintien de l'état de charge de la batterie au-dessus de la valeur d'état de charge cible prédéterminée (SOC_cible) ; et
- majoration de la valeur d'état de charge cible prédéterminée (SOC_cible) lorsque les conditions critiques d'utilisation de la batterie sont détectées, de manière à anticiper l'étape d'activation de la phase de maintien de charge de la batterie,

la batterie étant une batterie de traction d'un véhicule hybride comprenant un moteur thermique et une machine électrique, **caractérisé en ce que**
l'étape de détection des conditions critiques d'utilisation de la batterie comprenant :

- une étape d'estimation de la puissance maximale de recharge qu'il serait possible de fournir à la batterie en tenant compte d'une part, des conditions de roulage courantes du véhicule et, d'autre part, de l'énergie électrique fournie par la batterie de traction pour l'alimentation du réseau de bord basse tension du véhicule, et
- la comparaison de la puissance maximale de recharge ainsi estimée avec un seuil prédéfini de détection en puissance des conditions critiques d'utilisation de la batterie.

2. Procédé selon la revendication 1, **caractérisé en ce que** l'estimation de la puissance maximale de recharge qu'il serait possible de fournir à la batterie comprend le calcul suivant :

$$P_{\text{rechargemax}}(t) = \min\left(\left(\overline{P_{eng}}(t) - P_{GMT}(t)\right) \times \eta_{ME} + P_{dcdc}(t), Pbat_{\max}\right)$$

où $P_{\text{rehargemx}}(t)$ est l'estimation de la puissance maximale de recharge qu'il serait possible de fournir à la batterie, $\overline{P_{eng}}(t)$ est la puissance mécanique maximale que peut fournir le moteur thermique ;
$Pbat_{\max}$ est la puissance de recharge maximale autorisée pour la batterie ;
$P_{dcdc}(t)$ est la puissance consommée par un convertisseur DC/DC utilisé pour permettre d'alimenter, à partir de l'énergie prise sur la batterie de traction, le réseau de bord basse tension du véhicule ;
$P_{GMT}(t)$ est la puissance mécanique nécessaire à la traction ; et
$\eta_{ME}$ est le rendement de la machine électrique.

3. Procédé selon la revendication 2, **caractérisé en ce que** l'estimation de la puissance maximale de recharge est une valeur moyennée $\left(P_{\text{rechargemax}}^{moy}\right)$ déduite à partir des valeurs moyennes d'un ensemble de valeurs instantanées respectivement de $P_{dcdc}(t)$ et $P_{GMT}(t)$ acquises sur une fenêtre temporelle glissante.

4. Procédé selon la revendication 3, **caractérisé en ce que** la fenêtre temporelle glissante a une durée de l'ordre de 300s.

5. Procédé selon l'une quelconque des revendications 1 à 4, **caractérisé en ce que** l'étape de majoration de la valeur d'état de charge cible prédéterminée (SOC_cible) inclut la détermination d'une valeur d'autonomie cible du véhicule en mode tout électrique, l'estimation d'une valeur d'énergie électrique nécessaire pour assurer l'autonomie cible dans les conditions courantes d'utilisation du véhicule et la conversion de la valeur d'énergie électrique nécessaire en une valeur d'état de charge en utilisant un facteur de conversion tenant compte de la température et du vieillissement de la batterie.

6. Dispositif de gestion de l'état de charge (SOC) d'une batterie de traction d'un véhicule hybride comprenant un moteur thermique et une machine électrique, ledit dispositif comprenant des moyens de contrôle de la batterie pour activer des moyens de de recharge de la batterie destinés à recharger la batterie d'une manière intermittente en vue de maintenir l'état de charge de la batterie au-dessus d'une valeur d'état de charge cible prédéterminée (SOC_cible), ledit dispositif étant **caractérisé en ce que** lesdits moyens de contrôles sont aptes à détecter des conditions critiques d'utilisation de la batterie propres à empêcher le maintien de l'état de charge de la batterie au-dessus de la valeur d'état de charge cible prédéterminée et commander une majoration de la valeur d'état de charge cible prédéterminée lorsque les conditions critiques d'utilisation sont détectées, de manière à anticiper l'activation des moyens de recharges de la batterie, lesdits moyens de contrôle étant aptes à détecter les conditions critiques d'utilisation de la batterie en estimant la puissance maximale de recharge qu'il serait possible de fournir à la batterie en tenant compte d'une part, des conditions de roulage courantes du véhicule et, d'autre part, de l'énergie électrique fournie par la batterie de traction pour l'alimentation du réseau de bord basse tension du véhicule, et en comparant la puissance maximale de recharge ainsi estimée avec un seuil prédéfini de détection en puissance des conditions critiques d'utilisation de la batterie.

**7.** Véhicule automobile hybride comprenant une batterie de traction et un dispositif de gestion de l'état de charge de la batterie selon la revendication 6.

**Patentansprüche**

**1.** Verfahren zur Verwaltung des Ladezustands (SOC) einer Batterie, umfassend einen Schritt des Aktivierens einer Batterieladungserhaltungsphase, in der die Batterie intermittierend aufgeladen wird, um den Ladezustand der Batterie über einem vorbestimmten Ladezustandszielwert (SOC_cible) zu erhalten, wobei das Verfahren **dadurch gekennzeichnet ist, dass** es die folgenden Schritte umfasst:

- Erkennen kritischer Nutzungsbedingungen der Batterie, die geeignet sind, das Erhalten des Ladezustands der Batterie über dem vorbestimmten Ladezustandszielwert (SOC_cible) zu verhindern, und
- Erhöhen des vorbestimmten Ladezustandszielwerts (SOC_cible), wenn die kritischen Nutzungsbedingungen der Batterie erkannt werden, um den Schritt des Aktivierens der Batterieladungserhaltungsphase vorzuziehen,

wobei die Batterie eine Traktionsbatterie eines Hybridfahrzeugs ist, das einen Verbrennungsmotor und eine elektrische Maschine umfasst,
**dadurch gekennzeichnet, dass** der Schritt des Erkennens der kritischen Nutzungsbedingungen der Batterie Folgendes umfasst:

- einen Schritt des Schätzens der maximalen Aufladeleistung, die unter Berücksichtigung einerseits der aktuellen Fahrbedingungen des Fahrzeugs und andererseits der von der Traktionsbatterie zur Versorgung des Niederspannungsbordnetzes des Fahrzeugs abgegebenen elektrischen Energie an die Batterie abgegeben werden könnte, und
- das Vergleichen der so geschätzten maximalen Aufladeleistung mit einem vorgegebenen leistungsbezogenen Schwellenwert für das Erkennen der kritischen Nutzungsbedingungen der Batterie.

**2.** Verfahren nach Anspruch 1, **dadurch gekennzeichnet, dass** das Schätzen der maximalen Aufladeleistung, die an die Batterie abgegeben werden könnte, die folgende Berechnung umfasst:

$$P_{\text{rechargemax}}(t) \ = \ \min\left(\left(\overline{P_{eng}}(t) - P_{GMT}(t)\right) x \, \eta_{ME} + P_{dcdc}(t), Pbat_{max}\right)$$

wobei $P_{\text{rechargemax}}(t)$ der Schätzwert der maximalen Aufladeleistung ist, die an die Batterie abgegeben werden könnte;
$\overline{P_{eng}}(t)$ die maximale mechanische Leistung ist, die der Verbrennungsmotor abgegeben kann;
$Pbat_{max}$ die höchstzulässige Aufladeleistung für die Batterie ist;
$P_{dcdc}(t)$ die Leistung ist, die von einem DC/DC-Wandler verbraucht wird, der verwendet wird, um es zu ermöglichen, ausgehend von der an der Traktionsbatterie abgegriffenen Energie das Niederspannungsbordnetz des Fahrzeugs zu versorgen;
$P_{GMT}(t)$ die für die Traktion erforderliche mechanische Leistung ist und
$\eta_{ME}$ der Wirkungsgrad der elektrischen Maschine ist.

**3.** Verfahren nach Anspruch 2, **dadurch gekennzeichnet, dass** der Schätzwert der maximalen Aufladeleistung ein Mittelwert $\left(P_{rechargemax}^{moy}\right)$ ist, der aus den Mittelwerten einer Gesamtheit von jeweiligen Momentanwerten für $P_{dcdc}(t)$ und $P_{GMT}(t)$, die über ein gleitendes Zeitfenster erfasst werden, hergeleitet wird.

**4.** Verfahren nach Anspruch 3, **dadurch gekennzeichnet, dass** das gleitende Zeitfenster eine Dauer in der Größenordnung von 300 s hat.

**5.** Verfahren nach einem der Ansprüche 1 bis 4, **dadurch gekennzeichnet, dass** der Schritt des Erhöhens des vorbestimmten Ladezustandszielwerts (SOC_cible) das Bestimmen eines Zielwerts für die Reichweite des Fahrzeugs im reinen Elektrobetrieb, das Schätzen eines Werts für die zur Gewährleistung der Zielreichweite unter den aktuellen Nutzungsbedingungen des Fahrzeugs erforderlichen elektrischen Energie und das Umwandeln des Werts für die erforderliche elektrische Energie in einen Ladezustandswert unter Verwendung eines Umwandlungsfaktors, der die Temperatur und die Alterung der Batterie berücksichtigt, beinhaltet.

6. Vorrichtung zur Verwaltung des Ladezustands (SOC) einer Traktionsbatterie eines Hybridfahrzeugs, das einen Verbrennungsmotor und eine elektrische Maschine umfasst, wobei die Vorrichtung Mittel zur Überwachung der Batterie umfasst, um Mittel zum Aufladen der Batterie zu aktivieren, die dazu bestimmt sind, die Batterie intermittierend aufzuladen, um den Ladezustand der Batterie über einem vorbestimmten Ladezustandszielwert (SOC_cible) zu erhalten, wobei die Vorrichtung **dadurch gekennzeichnet ist, dass** die Überwachungsmittel in der Lage sind, kritische Nutzungsbedingungen der Batterie zu erkennen, die geeignet sind, das Erhalten des Ladezustands der Batterie über dem vorbestimmten Ladezustandszielwert zu verhindern, und eine Erhöhung des Ladezustandszielwerts zu steuern, wenn die kritischen Nutzungsbedingungen erkannt werden, so dass die Aktivierung der Batterieauflademittel vorgezogen wird, wobei die Überwachungsmittel in der Lage sind, die kritischen Nutzungsbedingungen der Batterie zu erkennen, indem sie die maximale Aufladeleistung schätzen, die unter Berücksichtigung einerseits der aktuellen Fahrbedingungen des Fahrzeugs und andererseits der von der Traktionsbatterie zur Versorgung des Niederspannungsbordnetzes des Fahrzeugs abgegebenen elektrischen Energie an die Batterie abgegeben werden könnte, und die so geschätzte maximale Aufladeleistung mit einem vorgegebenen leistungsbezogenen Schwellenwert für das Erkennen der kritischen Nutzungsbedingungen der Batterie vergleichen.

7. Hybridkraftfahrzeug mit einer Traktionsbatterie und einer Vorrichtung zur Verwaltung des Ladezustands der Batterie nach Anspruch 6.

## Claims

1. Method for managing the state of charge (SOC) of a battery comprising a step of activating a float-charge phase of the battery, wherein the battery is intermittently charged with a view to maintaining the state of charge of the battery above a predetermined target state of charge value (SOC_target), the method being **characterized in that** it comprises the steps of:

   - detection of critical conditions of use of the battery likely to prevent the state of charge of the battery from being maintained above the predetermined target state of charge value (SOC_target); and
   - increasing the predetermined target state of charge value (SOC_target) when the critical conditions of use of the battery are detected, such as to anticipate the step of activating the battery float-charge phase, the battery being a traction battery of a hybrid vehicle comprising an internal combustion engine and an electrical machine, **characterized in that** the step of detecting the critical conditions of use of the battery comprises:
   - a step of estimating the maximum charging power that it would be possible to supply to the battery considering the current driving conditions of the vehicle and the electrical energy supplied by the traction battery to power the on-board low-voltage electrical system of the vehicle, and
   - comparison of the maximum charging power thus estimated with a predefined power threshold of detection of the critical conditions of use of the battery.

2. Method according to Claim 1, **characterized in that** the estimate of the maximum charging power that it would be possible to supply to the battery comprises the following calculation:

$$P_{\text{chargemax}}(t) = \min\left(\left(\overline{P_{eng}}(t) - P_{GMT}(t)\right) \times \eta_{ME} + P_{dcdc}(t), Pbat_{\max}\right)$$

where $P_{\text{chargemax}}(t)$ is the estimate of the maximum charging power that it would be possible to supply to the battery,

$\overline{P_{eng}}(t)$ is the maximum mechanical power that the internal combustion engine can supply;

$Pbat_{\max}$ is the maximum charging power authorized for the battery;

$P_{dcdc}(t)$ is the power consumed by a DC/DC converter used to allow the low-voltage on-board electrical system of the vehicle to be supplied from the energy taken on the traction battery;

$P_{GMT}(t)$ is the mechanical power required for traction; and

$\eta_{ME}$ is the efficiency of the electrical machine.

3. Method according to Claim 2, **characterized in that** the estimate of the maximum charging power is an averaged value $\left( P_{\text{chargemax}}^{avg} \right)$ derived from average values of a set of instantaneous values of $P_{dcdc}(t)$ and $P_{GMT}(t)$ respectively, acquired over a sliding time window.

4. Method according to Claim 3, **characterized in that** the sliding time window has a duration of the order of 300s.

5. The method according to any one of Claims 1 to 4, **characterized in that** the step of increasing the predetermined target state of charge value (SOC_target) includes determining a target autonomy value of the vehicle in all-electric mode, the estimate of an electric energy value required to ensure the target autonomy in the current conditions of use of the vehicle and the conversion of the required electric energy value into a state of charge value by using a conversion factor that takes the temperature and the aging of the battery into account.

6. Device for managing the state of charge (SOC) of a traction battery of a hybrid vehicle comprising an internal combustion engine and an electrical machine, said device comprising battery control means for activating battery charging means designed to charge the battery in an intermittent manner in order to maintain the state of charge of the battery above a predetermined target state of charge value (SOC_target), said device being **characterized in that** said control means are able to detect critical conditions of use of the battery likely to prevent the state of charge of the battery from being maintained above the predetermined target state of charge value and to command an increase of the predetermined target state of charge value when the critical conditions of use are detected, so as to anticipate the activation of the battery charging means, said control means being able to detect the critical conditions of use of the battery by estimating the maximum charging power that it would be possible to supply to the battery considering the current driving conditions of the vehicle and the electrical energy supplied by the traction battery to power the on-board low-voltage electrical system of the vehicle, and by comparing the maximum charging power thus estimated with a predefined power threshold of detection of the critical conditions of use of the battery.

7. Hybrid motor vehicle comprising a traction battery and a device for managing the state of charge of the battery according to Claim 6.

# Figure unique

t=1000s, on entre dans un profil de roulage critique

t=1800s Début du maintien de charge avec la stratégie SoC=35%

t=3000s Début du maintien de charge sans la stratégie SoC=20%

Anticipation de 1200s
12% de SoC gagné

SoC_cible

Détection des conditions critiques
Adaptation du SoC cible (t=1200s)

Cycle routier nominal

Temps (s)

Embouteillage avec 5% de pente et forte consommation accessoires

EP 3 215 394 B1

**EP 3 215 394 B1**

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2992274

- EP 0829389 A